# EUROPEAN PATENT SPECIFICATION

(11) **EP 2 366 725 B1**
(45) Date of publication and mention of the grant of the patent: **16.03.2016**
(21) Application number: 10425070.9
(22) Date of filing: 16.03.2010
(51) Int. Cl.: C08G 63/00, C08L 67/00, C08K 7/22, C08K 7/00

(54) **Composite material**
Komposit-Materialien
Matériaux composites

(43) Date of publication of application: 21.09.2011
(73) Proprietor: Mobiltrade SA, 6537 Grono (CH)
(72) Inventor: Randis, Filippo, 22070 Beregazzo con Figliaro, COMO (IT)
(74) Representative: Long, Giorgio

(56) References cited:
- WO-A2-2006/130193
- US-A- 4 582 756
- US-A- 6 056 904
- US-A1- 2002 086 140
- DATABASE WPI Week 200344 Thomson Scientific, London, GB; AN 2003-460601 XP002589117 & JP 2002 285008 A (MATSUSHITA ELECTRIC WORKS LTD) 3 October 2002 (2002-10-03)
- DATABASE WPI Week 200721 Thomson Scientific, London, GB; AN 2007-202651 XP002589118 & JP 2007 002153 A (MATSUSHITA ELECTRIC WORKS LTD) 11 January 2007 (2007-01-11)
- DATABASE WPI Week 200220 Thomson Scientific, London, GB; AN 2002-150642 XP002589119 & JP 2001 207066 A (MATSUSHITA ELECTRIC WORKS LTD) 31 July 2001 (2001-07-31)

## Description

. The present invention concerns a composite material able to be used in particular in the field of sanitary ware, furnishing or even in the industrial field as technological material.

. So-called "solid-surface" materials are composite materials obtained by mixing an acrylic resin with a mineral filler and polymerising the resin until the composite material is formed, equipped with an appearance and mechanical and chemical surface properties that are similar, if not comparable, to those of marble or granite. This kind of material is increasingly used in the field of sanitary ware, for example for making sinks, bath tubs or kitchen worktops. In certain cases, the chemical properties, like resistance to acids or impermeability, are even better than those of some natural materials, which makes the manufactured pieces made from "solid-surface" material preferable to conventional ones.

. However, these composite materials have some drawbacks that limit their use. The biggest drawback is that the mixture of the various components that will, after polymerisation, constitute the composite material is not dimensionally stable, since over time there is stratification of the heaviest component, generally consisting of the mineral filler, towards the bottom. It is thus necessary to mix the various components at the location of production of the manufactured piece, with it not being possible to use a preformed mixture.

. A further drawback consists of the fact that "solid-surface" materials are rather heavy (specific weight of about 1.7 g/cc), which makes their manipulation awkward and expensive, especially in the case of sheets of substantial size like those used as kitchen work surfaces.

. The purpose of the present invention is therefore to provide a composite material that solves the aforementioned problems and that also has mechanical and chemical properties that are comparable if not actually better than known "solid-surface" materials.

. Such a purpose is accomplished by a composite material and by manufactured pieces made with such a composite material, as outlined by the attached claims, the definitions of which form an integral part of the present description.

. The composite material according to the present invention comprises an iso-neopentyl resin and a polymeric inert filler, said polymeric inert filler I consisting of micronised high-density polyethylene (HDPE) and an expanded acrylic copolymer in spheroidal form.

. By the term "iso-neopentyl resin" we mean an unsaturated polyester resin formed from isophthalic acid and neopentyl glycol.

. According to an embodiment, the resin used for the present invention is pre-accelerated, has a viscosity prior to final polymerisation of between 500 and 600 mPa.s (measured at 25°C with a Brookfield RVF Spindle 20 rpm instrument) and a styrene content of less than 35%. A particularly preferred example of such a resin is resin ISO-NP G H C 9 0 4 A S Z 15 commercialised by SIRCA POLYSYSTEMS.

. According to an embodiment of the invention, the micronised HDPE used in the composite material has a grain size of between 150 and 300 microns, with an average grain size of between 200 and 240 microns, and a density of less than 1 g/cc. A particularly preferred example of micronised HDPE for the purposes of the invention is PLASTENE M.SP_081 commercialised by POLIPLAST.

. According to an embodiment of the invention, the expanded acrylic polymer in spheroidal form has a grain size of between 35 and 55 microns and a density of between 20 and 30 kg/mc. A particularly preferred example of said acrylic polymer is EXPANCEL^{®} 920 DET 40 d25 microspheres commercialised by AKZO NOBEL.

. In an embodiment of the invention, the composite material contains the components in the following weight proportions:

| | |
|---|---|
| iso-neopentyl resin | 50-70 |
| micronised HDPE | 25-15 |
| spheroidal acrylic polymer | 0.6-1 |

The composite material can also contain a dye in a weight proportion of 1-2%.

. According to an aspect of the invention, a mixture of the aforementioned components is obtained that is characterised by dimensional stability, i.e. able to keep the polymeric filler contained in it in dispersed form avoiding its stratification on the bottom or on the surface of the resin.

. Such a mixture can be prepared by mixing of the various components. A preferred process is described hereafter.

. The iso-neopentyl resin is inserted, for example by means of a head pump, inside a tank equipped with a mechanical stirrer, for example a stirrer with finned blades. The tank is kept at a temperature of about 25 °C (for example through an outer jacket) so as to condition the resin, then the spheroidal acrylic polymer is inserted, preferably through a membrane pump, given the volatile nature of the microsphere powder. Then finally the micronised HDPE is inserted. After suitable mixing, the mixture thus obtained is vacuum degassed, preferably for at least 15 minutes.

. The mixture described above can be used immediately after its preparation or it can be packaged and put on sale as such, for its subsequent use at the location of production of the manufactured pieces for which it is intended.

. The preparation of the composite material from the aforementioned mixture can be carried out for example by injection moulding, by adding to the mixture a suitable catalyst of the polymerisation reaction of iso-neopentyl resin. As the catalyst, it is possible to advantageously use methylethylketone peroxide/acetylacetone peroxide, in quantities of between 1 and 2% by weight with respect to the weight of the mixture. The aforementioned dye can also be added to the mixture in this step.

. Preferably, the injection is carried out at a temperature of at least 25°C and the composite material obtained after the polymerisation of the resin is advantageously subjected to a post-curing step at 65-70°C for about 3 hours.

. The composite material obtained as described from the mixture defined above has a low density, preferably between 0.8 and 0.9 g/cc, more preferably about 0.85 g/cc.

. The composite material of the invention also has a high resistance to chemical agents, both acids and bases, a substantial mechanical resistance to scratching and is water-repellent.

. The advantages of the mixture according to the present invention and of the composite material that can be obtained from it are clear and in part already described above. Indeed, the mixture is not subject to phenomena of decanting of the filler with respect to the resin and it is thus stable and suitable for storage and transportation.

. The composite material is light, this being an advantage that also has an impact upon the transportation costs of the manufactured piece, resistant to corrosive agents and to scratching and is configured as a alternative and advantageous material compared to solid-surface materials currently known.

. The composite material of the invention can advantageously be used to produce manufactured pieces in various fields, including the field of sanitary ware (shower tray, bath tubs, WCs, kitchen sinks), furnishing (tables, laboratory work benches) or even the industrial field (casings of electric motors, special pipes, panels for continuous faces, structure for photovoltaic panels and structures for aeolic blades or propellers).

. The man skilled in the art can of course bring numerous variants to the invention without however departing from the scope of protection defined by the claims attached hereto.

## Claims

1. Mixture for a composite material consisting of an iso-neopentyl resin and a polymeric inert filler and optionally a dye in weight proportion of 1-2%, said polymeric inert filler consisting of micronised high-density polyethylene (HDPE) and a expanded acrylic copolymer in spheroidal form, wherein said iso-neopentyl resin is a pre-accelerated unsaturated polyester resin formed from isophthalic acid and neopentyl glycol, wherein said resin has a viscosity of between 500 and 600 mPa.s (measured at 25°C with a Brookfield RVF Spindle 20 rpm instrument) and a styrene content of less than 35%.

2. Mixture according to claim 1, wherein said micronised HDPE has a grain size of between 150 and 300 microns, with average grain size of between 200 and 240 microns, and a density of less than 1 g/cc.

3. Mixture according to any one of claims 1 to 2, wherein said expanded acrylic polymer in spheroidal form has a grain size of between 35 and 55 microns and a density of between 20 and 30 kg/mc.

4. Mixture according to any one of claims 1 to 3, wherein said mixture contains the components in the following weight proportions: iso-neopentyl resin 50-70; micronised HDPE 25-15; spheroidal acrylic polymer 0.6-1.

5. Composite material obtained from the mixture according to any one of claims 1 to 4 by polymerisation of iso-neopentyl resin in the presence of a catalyst.

6. Composite material according to claim 5, wherein said catalyst is methylethylketone peroxide, acetylacetone peroxide or their mixtures.

7. Composite material according to claim 5 or 6, wherein said catalyst is used in weight quantities of between 1 and 2% with respect to the weight of the mixture.

8. Composite material according to any one of claims 5 to 7, having a density of between 0.8 and 0.9 g/cc, or else about 0.85 g/cc.

9. Process for preparing the mixture according to any one of claims 1 to 4, which comprises a step of mixing the components of said mixture under stirring and a step of vacuum degassing the mixture obtained.

10. Process for preparing the composite material according to any one of claims 5 to 8, comprising:
a) Providing a mixture according to any one of claims 1 to 4;
b) Adding a catalyst for polymerising said iso-neopentyl resin;
c) Conditioning the mixture or its mixture with said catalyst at a temperature of at least 25°C;
d) Injecting the mixture thus obtained in moulds for the formation of a manufactured piece and keeping the mixture in said moulds until the manufactured piece is formed;
e) optionally, post-treating the manufactured piece at 65-70°C for about 3 hours.

11. Manufactured pieces made of composite material as defined in any one of claims 5 to 8.

12. Manufactured pieces according to claim 11, selected from shower trays, bath tubs, WCs, kitchen sinks, tables, laboratory desks, casings of electric motors, special pipes, panels for continuous faces, structure for photovoltaic panels and structures for aeolic blades or propellers.

## Patentansprüche

1. Mischung für ein Komposit-Material bestehend aus einem iso-Neopentylharz und einem polymeren inerten Füllstoff und gegebenenfalls einem Farbstoff im Gewichtsverhältnis von 1-2%, wobei der polymere inerte Füllstoff aus mikronisiertem Polyethylen hoher Dichte (HDPE) und einem ausgedehnten Acryl-Copolymer in sphäroidischer Form besteht, wobei das iso-Neopentylharz ein vorbeschleunigtes ungesättigtes Polyesterharz ist, das aus Isophthalsäure und Neopentyl-Glykol gebildet wurde, wobei das Harz eine Viskosität von zwischen 500 und 600 mPa.s (gemessen bei 25°C mit einem Brookfield RVF Spindel 20 rpm Instrument) und einen Styrolgehalt von weniger als 35% aufweist.

2. Mischung nach Anspruch 1, wobei das mikronisierte HDPE eine Korngröße von zwischen 150 und 300 Mikrometer, mit durchschnittlicher Korngröße zwischen 200 und 240 Mikrometer, und eine Dichte von weniger als 1 g/cc aufweist.

3. Mischung nach einem der Ansprüche 1 bis 2, wobei das ausgedehnte Acryl-Polymer in sphäroidischer Form eine Korngröße von zwischen 35 und 55 Mikrometer und eine Dichte von zwischen 20 und 30 kg/mc aufweist.

4. Mischung nach einem der Ansprüche 1 bis 3, wobei die Mischung die Komponenten in den folgenden Gewichtsverhältnissen enthält: iso-Neopentylharz 50-70; mikronisiertes HDPE 25-15; sphäroidisches Acryl-Polymer 0,6-1.

5. Komposit-Material, erhalten aus der Mischung nach einem der Ansprüche 1 bis 4 durch Polymerisation von iso-Neopentylharz in Gegenwart eines Katalysators.

6. Komposit-Material nach Anspruch 5, wobei der Katalysator Methylethylketon-peroxid, Acetylaceton-peroxid oder deren Mischungen ist.

7. Komposit-Material nach Anspruch 5 oder 6, wobei der Katalysator in Gewichtsmengen von zwischen 1 und 2% bezogen auf das Gewicht der Mischung verwendet wird.

8. Komposit-Material nach einem der Ansprüche 5 bis 7, wobei es eine Dichte von zwischen 0,8 und 0,9 g/cc oder andernfalls etwa 0,85 g/cc aufweist.

9. Verfahren zum Herstellen der Mischung nach einem der Ansprüche 1 bis 4, das einen Schritt des Mischens der Komponenten der Mischung unter Rühren und einen Schritt des Vakuum-Entgasens der erhaltenen Mischung umfasst.

10. Verfahren zum Herstellen des Komposit-Materials nach einem der Ansprüche 5 bis 8, umfassend:
a) Bereitstellen einer Mischung nach einem der Ansprüche 1 bis 4;
b) Zugeben eines Katalysators zum Polymerisieren des iso-Neopentylharzes;
c) Konditionieren der Mischung oder dessen Mischung mit dem Katalysator bei einer Temperatur von mindestens 25°C;
d) Einspritzen der so erhaltenen Mischung in Formen zur Bildung eines hergestellten Stücks und Halten der Mischung in den Formen bis das hergestellte Stück gebildet ist;
e) gegebenenfalls, Nachbehandeln des hergestellten Stücks bei 65-70°C für etwa 3 Stunden.

11. Hergestellte Stücke, welche aus Komposit-Material, wie in einem der Ansprüche 5 bis 8 definiert, hergestellt wurden.

12. Hergestellte Stücke nach Anspruch 11, ausgewählt aus Duschwannen, Badewannen, WCs, Küchenspülen, Tischen, Labortischen, Gehäusen von elektrischen Motoren, Spezialrohren, Platten für kontinuierliche Fassaden, Struktur für Photovoltaikplatten und Strukturen für äolische Blätter oder Propeller.

## Revendications

1. Mélange pour un matériau composite consistant en une résine isonéopentyle et une charge inerte polymère et éventuellement un colorant dans une proportion en poids de 1 à 2 %, ladite charge inerte polymère consistant en polyéthylène haute densité (PEHD) micronisé et un copolymère acrylique expansé ayant une forme sphéroïdale, dans lequel ladite résine isonéopentyle est une résine polyester insaturé pré-accéléré, formée à partir d'acide isophtalique et de néopentylglycol, dans lequel ladite résine présente une viscosité comprise entre 500 et 600 mPa.s (mesurée à 25 °C à l'aide d'un instrument Brookfield RVF broche 20 tr/min) et une teneur en styrène inférieure à 35 %.

2. Mélange selon la revendication 1, dans lequel ledit polyéthylène haute densité (PEHD) micronisé présente une grosseur de grain comprise entre 150 et 300 micromètres, la grosseur de grain moyenne étant comprise entre 200 et 240 micromètres, et une densité inférieure à 1 g/cc.

3. Mélange selon l'une quelconque des revendications 1 à 2, dans lequel ledit polymère acrylique expansé ayant une forme sphéroïdale présente une grosseur de grain comprise entre 35 et 55 micromètres et une densité comprise entre 20 et 30 kg/mc.

4. Mélange selon l'une quelconque des revendications 1 à 3, dans lequel ledit mélange contient des composants dans les proportions en poids suivantes : résine isonéopentyle 50 à 70 ; PEHD micronisé 25 à 15 ; polymère acrylique sphéroïdal 0,6 à 1.

5. Matériau composite obtenu à partir du mélange selon l'une quelconque des revendications 1 à 4 par polymérisation d'une résine isonéopentyle, en présence d'un catalyseur.

6. Matériau composite selon la revendication 5, dans lequel ledit catalyseur est le peroxyde de méthyléthylcétone, le peroxyde d'acétylacétone ou leurs mélanges.

7. Matériau composite selon la revendication 5 ou 6, dans lequel ledit catalyseur est utilisé dans des quantités en poids comprises entre 1 et 2 % par rapport au poids du mélange.

8. Matériau composite selon l'une quelconque des revendications 5 à 7, présentant une densité comprise entre 0,8 et 0,9 g/cc, voire d'environ 0,85 g/cc.

9. Procédé de préparation du mélange selon l'une quelconque des revendications 1 à 4, qui comprend une étape de mélange des composants dudit mélange sous agitation et une étape de dégazage sous vide du mélange obtenu.

10. Procédé de préparation du matériau composite selon l'une quelconque des revendications 5 à 8, comprenant :
a) la fourniture d'un mélange selon l'une quelconque des revendications 1 à 4 ;
b) l'ajout d'un catalyseur pour la polymérisation de ladite résine isonéopentyle ;
c) le conditionnement du mélange ou de son mélange avec ledit catalyseur à une température d'au moins 25 °C ;
d) l'injection du mélange ainsi obtenu dans des moules pour la formation d'un article fabriqué et le maintien du mélange dans lesdits moules jusqu'à ce que l'article fabriqué soit formé ;
e) le cas échéant, le post-traitement de l'article fabriqué à 65 à 70 °C pendant environ 3 heures.

11. Articles fabriqués dans un matériau composite selon l'une quelconque des revendications 5 à 8.

12. Articles fabriqués selon la revendication 11, choisis parmi les bacs de douche, baignoires, cabinets de toilette, éviers de cuisine, tables, pupitres de laboratoire, carters de moteurs électriques, tuyaux spéciaux, panneaux pour surfaces continues, structure pour panneaux photovoltaïques et structures pour pales éoliennes ou hélices.
